# EUROPÄISCHE PATENTSCHRIFT

(11) **EP 1 018 589 B1**
(45) Veröffentlichungstag und Bekanntmachung des Hinweises auf die Patenterteilung: **15.05.2002**
(21) Anmeldenummer: 99123259.6
(22) Anmeldetag: 29.11.1999
(51) Int. Cl.: E05B 65/20

(54) **Toleranzausgleich für eine kraftübertragende Verbindung zwischen einem Handgriff und einem Schlossauslösehebel**
Tolerance-compensation for a power transmitting connection between a handle and a lock trigger
Compensation des tolérances d'une liaison de transmission d'une force entre une poignée et une gâchette de serrure

(30) Priorität: 30.12.1998 DE 19860824
(43) Veröffentlichungstag der Anmeldung: 12.07.2000
(73) Patentinhaber: Volkswagen Aktiengesellschaft, 38436 Wolfsburg (DE)
(72) Erfinder: Meyer, Dieter, 38442 Wolfsburg (DE); Sajfert, Drago, 38448 Wolfsburg (DE)

(56) Entgegenhaltungen:
- EP-A- 0 197 025
- EP-A- 0 389 273
- DE-A- 4 005 369

## Beschreibung

Die Erfindung betrifft einen Toleranzausgleich gemäß dem Oberbegriff des Patentanspruchs 1.

Ein Toleranzausgleich dieses Aufbaues, der in vorteilhafter Weise die Möglichkeit zur stufenlosen Kompensation von Toleranzen nach dem Einbau der kraftübertragenden Verbindung bietet, ist aus der DE 40 05 369 C2 bekannt. Dort wird ein Betätigungshebel, der zwei durch eine Druckfeder spreizbare, um eine gemeinsame Schwenkachse schwenkbare Teilhebel enthält, zwischen einem schloßseitigen Anschlag einerseits und einem handgriffseitigen Anschlag andererseits gleichsam eingespannt; die sich bei den jeweils vorhandenen Toleranzen unter der Wirkung der Feder einstellende Spreizstellung wird mittels einer Arretierung nachträglich fixiert, die eine Schraube in einem der Hebelteile und ein von dieser durchsetztes Langloch in dem anderen Hebelteil aufweist; durch Anziehen der Schraube werden die beiden Hebelteile gleichsam miteinander verbunden.

Diese Lösung bietet, wie die Druckschrift, insbesondere die in ihr enthaltene Schilderung des Standes der Technik auf diesem Gebiet, erkennen läßt, nicht nur Vorteile hinsichtlich einfachen Aufbaues und einfacher Fixierung der Toleranzausgleichstellungen der beiden Hebelteile, sondern vermeidet in ebenfalls in vorteilhafter Weise auch das Vorsehen eines Leerlaufs, der bei bestimmten bekannten Konstruktionen zur Kompensation etwa auftretender Toleranzen vorgesehen ist. Ein derartiger Leerlauf ist, zumal er in Abhängigkeit von der jeweiligen Toleranz unterschiedliche Größen bei den verschiedenen Türschlössern ein und desselben Fahrzeugs haben kann, ausgesprochen bedienerunfreundlich.

In vielen Fällen befindet sich der zur Betätigung des Schlosses dienende Handgriff nicht in Nähe des Schlosses und damit des Auslösehebels, sondern an einer davon entfernten Stelle. In solchen Fällen setzt man mit Vorteil einen Bowdenzug zwischen dem Ort des Handgriffs einerseits und dem Ort des Schlosses andererseits ein, der einenends mit dem Handgriff und anderenends mit dem Betätigungshebel verbunden ist. Infolge der relativ großen Toleranzbreiten der Längen von Bowdenzügen ist bei derartigen kraftübertragenden Verbindungen ein Toleranzausgleich besonders wichtig. Es sei daran erinnert, daß, sofern nicht die Toleranzen kompensierende Maßnahmen getroffen sind, derartige Toleranzen Fehlfunktionen des Schlosses zur Folge haben können, da unter dem Einfluß der Toleranzen der Betätigungshebel Schwenklagen einnehmen kann, die nicht den zugeordneten Funktionsstellungen (Öffnen, Schließen, Vorraststellung) des Schlosses entsprechen, so daß dieses im späteren Betrieb nicht geöffnet werden kann bzw. nicht schließt.

Der Erfindung liegt die Aufgabe zugrunde, einen Toleranzausgleich für eine gattungsgemäße kraftübertragende Verbindung, d.h. eine solche mit einem Bowdenzug, zu schaffen, der ebenfalls einen Leerhub vermeidet und unabhängig von den Eigenheiten des Werkers, d.h. objektiv, arbeitet.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Die Erfindung erschöpft sich also nicht in der Übernahme eines zwei relativ zueinander um dieselbe Schwenkachse schwenkbare Hebelteile enthaltenden Betätigungshebels, sondern sieht eine dahingehende Abänderung dieser Hebelanordnung vor, daß der im eingesetzten Zustand mit der Seele des Bowdenzuges verbundene zweite Hebelteil durch die zweite Feder, die also zwischen den beiden Hebelteilen angeordnet ist, in Richtung Entfernung von dem Handgriff kraft- bzw. momentenbeaufschlagt ist. Demgegenüber ist bei dem ausführlich diskutierten Stand der Technik diese Feder als Spreizfeder, nämlich als Druckfeder, ausgebildet und angeordnet, so daß der mit dem zweiten Hebelteil bei der Erfindung allenfalls vergleichbare Hebelteil bei der bekannten Konstruktion gleichsam in Richtung vom Schloß weg kraft- bzw. momentenbeaufschlagt ist.

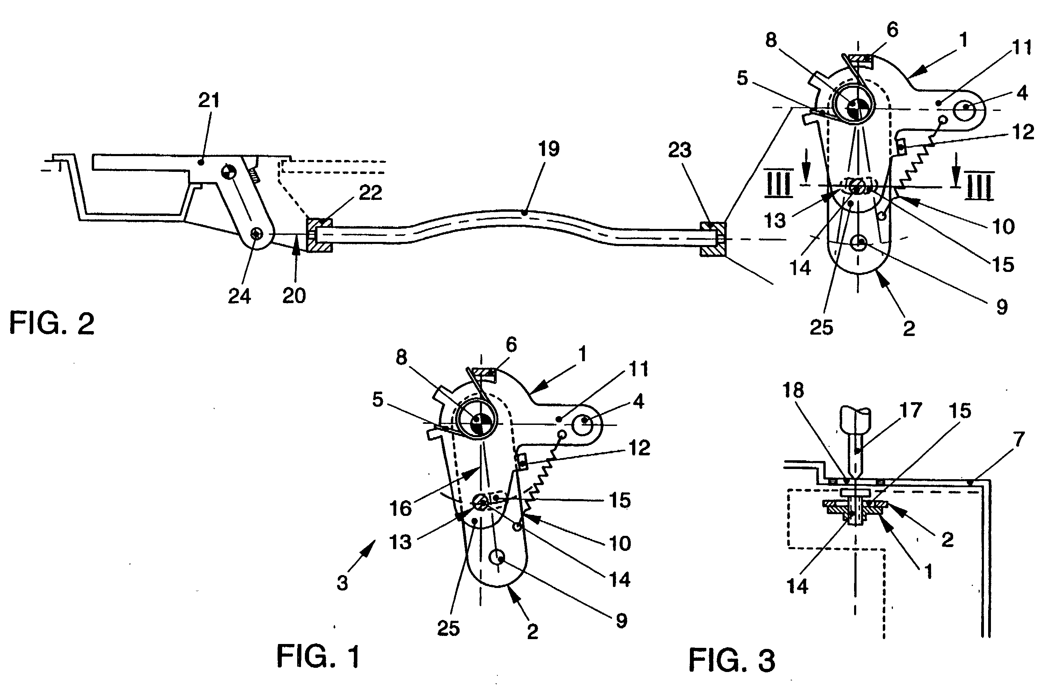

Ein Ausführungsbeispiel der Erfindung wird im folgenden anhand der Zeichnung erläutert, deren Figur 1 sich auf die Darstellung der den Toleranzausgleich bewirkenden Teile vor dem Einbau beschränkt, während Figur 2 die gesamte kraftübertragende Verbindung im eingebauten Zustand, d.h. nach erfolgter Kompensation der Toleranzen, wiedergibt. Figur 3 schließlich zeigt die in Figur 2 bei III-III angedeutete Schnittansicht.

Betrachtet man zunächst Figur 1, die die relative Lage der verschiedenen Teile im Anlieferzustand wiedergibt, so erkennt man den den ersten Hebelteil 1 und den zweiten Hebelteil 2 enthaltenden, allgemein mit 3 bezeichneten Betätigungshebel. Während der erste Hebelteil 1 mit dem Loch 4 zur Herstellung einer Verbindung mit dem einen bekannten Aufbau aufweisenden und daher nicht gezeichneten Auslösehebel des Schlosses versehen ist und durch die Schlingfeder 5 gegen den Anschlag 6 am Schloßgehäuse 7 (siehe Figur 3) um die beiden Hebelteile 8 gemeinsame, schloßseitige Schwenkachse 8 geschwenkt ist, weist der zweite Hebel 2 das Loch 9 zur Verbindung mit der Seele eines Bowdenzuges auf. Die als Zugfeder ausgeführte zweite Feder 10 ist in den Arm 11 des ersten Hebelteils 1 und in den zweiten Hebelteil 2 eingehängt, so daß sie diesen in Figur 1 entgegen dem Uhrzeigersinne bis zum Anschlagen an den Anschlag 12 des ersten Hebels 1 schwenkt. Diese zweite Feder 10 übt ein kleineres Moment auf den zweiten Hebel 2 aus, verglichen mit dem von der ersten Feder 5 auf den ersten Hebelteil 1 ausgeübten Moment. Der Anschlag 12 kann auch durch den Stift 14 gebildet sein.

Zwischen beiden Hebelteilen 1 und 2 ist eine allgemein mit 13 bezeichnete Arretierung vorgesehen, die den Schraubenbolzen 14 in diesem Ausführungsbeispiel an dem zweiten Hebelteil 2 und das auf einem Bogen um die gemeinsame Schwenkachse 8 der beiden Hebelteile verlaufende Langloch 15 in diesem Fall in dem ersten Hebelteil 1, und zwar in seinem zweiten Hebelarm 16, aufweist. Der Schraubenbolzen 14 besitzt, wie Figur 3 zeigt, einen Kopf, und nach Herstellung sämtlicher Einzelverbindungen wird mittels des Schraubendrehers 17, der durch eine Ausnehmung 18 in dem Schloßgehäuse 7 hindurchgeführt wird, durch Anziehen des Schraubenbolzens 14 eine feste Verbindung zwischen den beiden Hebelteilen 1 und 2 hergestellt.

Solange keine andere Kräfte auf die Hebelteile 1 und 2 wirken, nehmen sie unter der Wirkung der Feder 10 die in Figur 1 dargestellte relative Lage ein. Anders während des Einbaues: In Figur 2 ist bei 19 ein die Seele 20 aufweisender Bowdenzug dargestellt, der die Verbindung zwischen dem Türinnengriff 21 einerseits und dem Betätigungshebel 3 andererseits herstellt. Während der Montage wird die Seele 20 des Bowdenzuges beispielsweise mit einem hakenförmigen Ende in das Loch 9 in dem zweiten Hebelteil 2 eingehängt. Dazu muß dieser Teilteil entgegen der Wirkung der Feder 10 etwas im Uhrzeigersinn (bezogen auf die Darstellung der Figuren 1 und 2) verschwenkt werden. Da, wie bereits bemerkt, die Feder 10 schwächer ausgeführt ist als die erste Feder 5, behält dabei der erste Hebelteil 1 seine Lage am Anschlag 6 bei.

Das in Figur 2 linke Ende der Seele 20 des Bowdenzuges 19 (dessen Mantel bei 22 griffest und bei 23 schloßgehäusefest abgestützt ist) wird in das Loch 24 des Handgriffs 21 eingefädelt. Dadurch erfolgt in Abhängigkeit von den jeweiligen Fertigungstoleranzen aller genannten Bauteile ein mehr oder weniger großes Verschwenken des zweiten Hebelteils 2 relativ zum ersten Hebelteil 1, wobei wiederum die zweite Feder 10 für die Gewährleistung einer gewissen Spannung in der gesamten Verbindung verantwortlich ist. Die nun gefundene relative Schwenklage der beiden Hebelteile 1 und 2 wird mittels der Arretierung 13, d.h. durch Anziehen der Schraube 14, fixiert. Zur Unterbringung dieser Arretierung 13 besitzt der erste Hebelteil 1 den zweiten Hebelarm 25.

Mit der Erfindung ist demgemäß ein gattungsgemäßer Toleranzausgleich geschaffen, der bei einfachem Aufbau kontinuierlich arbeitet und einen unerwünschten Leerhub vermeidet.

## Patentansprüche

1. Toleranzausgleich für eine sich zwischen einem Handgriff und einem Schloßauslösehebel erstreckende kraftübertragende Verbindung, enthaltend einen den Handgriff mit einem schloßseitigen Betätigungshebel, der um eine Schwenkachse schwenkbar gelagert ist und der zur Verbindung mit dem Schloßauslösehebel eingerichtet ist, verbindenden Bowdenzug, **dadurch gekennzeichnet, daß** der Betätigungshebel (3) zwei um die Schwenkachse (8) relativ zueinander schwenkbare Hebelteile (1, 2) enthält, von denen einem zur Verbindung mit dem Schloßbetätigungshebel eingerichteten (4) ersten Hebelteil (1) eine ihn in Richtung auf einen schloßfesten ersten Anschlag (6) beaufschlagende erste Feder (5) zugeordnet ist, während eine ein kleineres Moment als die erste Feder (5) erzeugende zweite Feder (10) zwischen beiden Hebelteilen (1,2 ) derart angeordnet ist, daß sie im Sinne der Entfernung von dem Handgriff (21) den zweiten Hebelteil (2) beaufschlagt, dem ein dem entgegenwirkender zweiter Anschlag (12) an dem ersten Hebelteil (1) zugeordnet ist, und daß beiden Hebelteilen (1, 2) eine ihre Schwenkbewegungen relativ zueinander unterbindende, nach erfolgter Herstellung der kraftübertragenden Verbindung aktivierbare Arretierung (13) zugeordnet ist, die einen Arretierstift (14) an einem der Hebelteile (1) und ein einem Bogen um die Schwenkachse (8) folgendes Langloch (15) in dem anderen Hebelteil (2) enthält, das der Arretierstift (14) durchsetzt.

2. Toleranzausgleich nach Anspruch 1, **dadurch gekennzeichnet, daß** der Arretierstift eine in den einen Hebelteil (1) eingeschraubte Kopfschraube (14) ist, deren freier Schaftbereich in dem Langloch (15) verläuft.

3. Toleranzausgleich nach Anspruch 1 oder 2, **dadurch gekennzeichnet, daß** der erste Hebelteil (1) zwei einen von 180° abweichenden Winkel einschließende, starr verbundene Arme (11, 25) aufweist, von denen ein erster (11) zur Verbindung mit dem Auslösehebel und zur Anlenkung der zweiten Feder (10), dagegen der zweite (25) zur Unterbringung der Arretierung (13) eingerichtet ist und bezüglich der Schwenkachse (8) im wesentliche neben dem zweiten Hebelteil (2) verläuft.

## Claims

1. Tolerance compensation for a force-transmitting connection extending between a handle and a lock release lever, containing a Bowden cable connecting the handle to a lock-side actuating lever which is pivotably mounted about a pivot axis and which is designed for connection to the lock release lever, **characterized in that** the actuating lever (3) contains two lever parts (1, 2) which are pivotable relative to one another about the pivot axis (8) and of which a first lever part (1) designed (4) for connection to the lock release lever is assigned a first spring (5) loading said first lever part in the direction of a first stop (6) fixed to the lock, whilst a second spring (10) generating a lower moment than the first spring (5) is arranged between the two lever parts (1, 2), in such a way that said second spring loads the second lever part (2) with the effect of removing the latter from the handle (21), said second lever part being assigned a counteracting second stop (12) on the first lever part (1), and **in that** the two lever parts (1, 2) are assigned a detaining device (13) which prevents their pivoting movements relative to one another and is capable of being activated after the force-transmitting connection has been made and which contains, on one of the lever parts (1), a detaining pin (14) and, in the other lever part (2), a long hole (15) which describes an arc about the pivot axis (8) and through which the detaining pin (14) passes.

2. Tolerance compensation according to Claim 1, **characterized in that** the detaining pin is a cap screw (14) which is screwed into one lever part (1) and the free shank region of which runs in the long hole (15).

3. Tolerance compensation according to Claim 1 or 2, **characterized in that** the first lever part (1) has two rigidly connected arms (11, 25) which form an angle deviating from 180° and a first (11) of which is designed for connection to the release lever and for the articulation of the second spring (10), whereas the second arm (25) is designed for accommodating the detaining device (13) and runs essentially next to the second lever part (2) with respect to the pivot axis (8).

## Revendications

1. Compensation des tolérances pour une liaison de transmission de force entre une poignée et une gâchette de serrure, contenant un câble Bowden reliant la poignée à un levier d'actionnement du côté de la serrure qui est monté pivotant autour d'un axe de pivotement et qui est destiné à la connexion à la gâchette de serrure, **caractérisée en ce que** le levier d'actionnement (3) contient deux parties de levier (1, 2) pouvant pivoter l'une par rapport à l'autre autour de l'axe de pivotement (8), dont une première partie de levier (1) prévue (4) pour la connexion avec le levier d'actionnement de la serrure est associée à un premier ressort (5) la sollicitant dans la direction d'une première butée fixée à la serrure (6), tandis qu'un deuxième ressort (10) produisant un couple moins important que le premier ressort (5) est disposé de telle sorte entre les deux parties de levier (1, 2), qu'il sollicite, en l'éloignant de la poignée (21), la deuxième partie de levier (2) à laquelle est associée une deuxième butée (12) d'effet opposé sur la première partie de levier (1), et **en ce qu'**aux deux parties de levier (1, 2) est associé un arrêt (13) interrompant leurs mouvements de pivotement l'une par rapport à l'autre, activable après la réalisation de la liaison de transmission de force, qui contient une broche d'arrêt (14) sur l'une des parties de levier (1) et un trou oblong (15) suivant un arc autour de l'axe de pivotement (8), dans l'autre partie de levier (2), qui traverse la broche d'arrêt (14).

2. Compensation des tolérances selon la revendication 1, **caractérisée en ce que** la broche d'arrêt est une vis à tête (14) vissée dans une partie de levier (1), dont la partie de tige libre s'étend dans le trou oblong (15).

3. Compensation des tolérances selon la revendication 1 ou 2, **caractérisée en ce que** la première partie de levier (1) présente deux bras (11, 25) reliés rigidement, enfermant un écart angulaire de 180°, dont un premier (11) est prévu pour la connexion avec la gâchette et pour l'articulation du deuxième ressort (10), et le deuxième (25) est prévu au contraire pour la mise en place de l'arrêt (13) et s'étend par rapport à l'axe de pivotement (8) essentiellement à côté de la deuxième partie de levier (2).
